# EUROPEAN PATENT SPECIFICATION

(11) **EP 1 884 424 B1**
(45) Date of publication and mention of the grant of the patent: **28.07.2010**
(21) Application number: 06016174.2
(22) Date of filing: 03.08.2006
(51) Int. Cl.: B60S 1/40

(54) **Windshield wiper bridge base assembly**
Brückenelement für ein Scheibenwischerverbindungsteil
Elément formant la base d'un connecteur d'essuie glace

(43) Date of publication of application: 06.02.2008
(73) Proprietor: Chin Pech Co., Ltd., Hsin-Chuang City, Taipei Hsien (TW)
(72) Inventor: Ku, Shu-Lan, Hsingchuang City, Taipei Hsien, (TW)
(74) Representative: Nordmeyer, Philipp Werner

(56) References cited:
- DE-A1- 10 043 427
- DE-A1- 10 333 687
- DE-U1- 20 220 355
- FR-A3- 2 874 200
- US-A- 6 161 248

## Description

### BACKGROUND OF THE INVENTION

### I. Field of the Invention

The bridge base of the windshield wiper assembly is utilized to combine wiper blade support and housing. This invention, in particular, relates to a bridge base allowing a specific wiper blade support to be combined with any housing.

### II. Description of the Prior Art

The windshield wiper assemblies currently sold on the market varies with different (automobile) brands. Furthermore, the windshield wiper assembly consists of consumables that require constant replacements after use; for example, the wiper blade needs to be replaced due to damage, the windshield wiper assembly needs to be replaced due to breakage, and so on. Apparently, windshield wiper assembly offers huge business opportunities. In addition, the designers of windshield wiper assemblies have progressed with the emergence of modified automobiles in recent years so as to meet consumer demand. However, the windshield wiper assemblies currently sold on the market are designed and manufactured expressly for certain (automobile) brands. Therefore, dimensions of windshield wiper assembly vary with different automobile sizes. In addition, the assembly must vary in configuration so as to meet the requirements of respective brands. Under the circumstances, the manufacturers who wish to occupy a high market share must simultaneously launch as many varieties of a windshield wiper assembly as possible so as to fit in numerous popular models of automobiles. This shall no doubt cause a significant hike in mold costs.

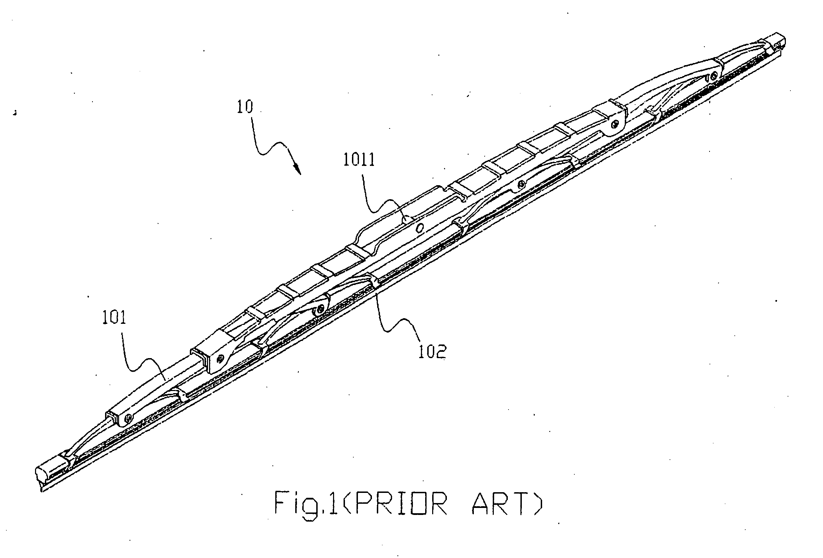

With reference to Fig. 1, the windshield wiper assembly 10 of a prior art consists of a metal wiper blade frame 101 and a wiper blade 102. Additionally, an adapter 1011 is formed on top of the wiper blade frame 101 for combining the windshield wiper assembly with a wiper arm. However, the wiper arm of each automobile model has a specific adapter. Hence, there must be a huge stock of variably configured parts and products to support production and sales. This burdens the manufacturers with heavy inventory in addition to mold costs.

DE 103 33 687 A1 relates to a wiper blade to be mounted on the wiper arm of a windshield wiper assembly.

US 6,161,248 relates to a wiper blade for vehicle windowpanes.

### SUMMARY OF THE INVENTION

In view of the drawbacks of the said windshield wiper assembly of a prior art, the main objective of the invention is to provide a bridge allowing a specific wiper blade support to be combined with the housing of any (automobile) brand so as to achieve cost effectiveness in production and application of the wiper blade and maximize alternatives to such a combination.

The bridge base of the invention is as defined in claim 1 and comprises more than one of the horizontal pins and vertical tenons that are formed on a base so as to horizontally and vertically fasten the bridge to the wiper blade support. Further, the bottom edge of the bridge base of the invention can be buckled to a housing. This design may assist the wiper blade manufacturers in achieving cost effectiveness because the male mold is applicable to the bottom edge of any housing. On the other hand, as far as the users are concerned, the bridge base of the invention allows a separate purchase of the wiper blade with a bridge base to match any housings selected according to automobile models. Besides, as far as the vendors are concerned, the bridge base of the invention may assist them in reducing the inventory cost because they only need to focus on stocking wiper blade supports of different lengths and housings of various (automobile) brands. More particularly, the selection available to consumers is beyond comparison because the bridge base of the invention maximizes alternatives to such a combination.

Further aspects, objects, and desirable features of the invention will be better understood from the detailed description and drawings that follow in which various embodiments of the disclosed invention are illustrated by way of example.

### BRIEF DESCRIPTION OF THE DRAWINGS

Fig.1 is a sectional view of the windshield wiper assembly of a prior art.
Fig. 2 is a sectional view of the present invention.
Fig. 3 is a cross sectional view of the present invention.
Fig. 4 is a sectional view of an embodiment of the present invention.
Fig. 5 is a cross sectional view of an embodiment of the present invention.
Fig. 6 is a sectional view of embodiment (I) of the present invention.
Fig. 7 is a cross sectional view of embodiment (I) of the present invention.
Fig. 8 is a sectional view of embodiment (II) of the present invention.
Fig. 9 is a cross sectional view of embodiment (II) of the present invention.
Fig. 10 is a sectional view of embodiment (III) of the present invention.

### DESCRIPTION OF THE PREFERRED EMBODIMENT

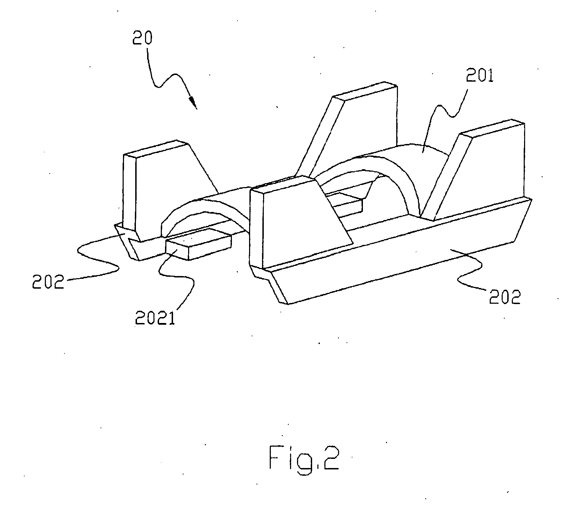

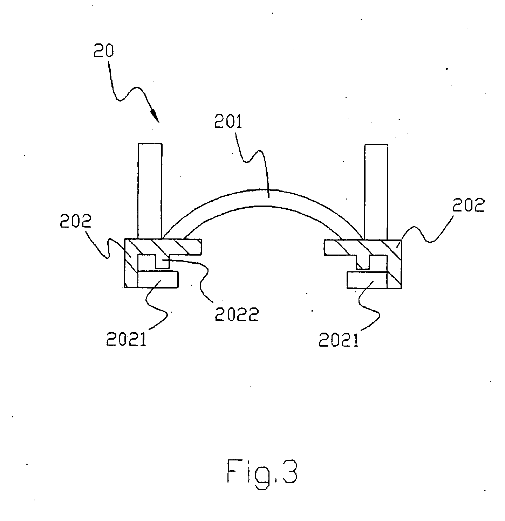

With reference to Fig. 2, which is a cross sectional view of the invention, the bridge base 20, die cast base in an integrated mould, comprises of a connection portion 201 and buckle bands 202, which are formed respectively on the two sides of connection portion 201 and has a complex number of horizontal pins 2021, which are formed by outwardly bending the bottom edge of the buckle bands 202 and a tenon 2022 (see Fig.3), which is formed by downwardly bending the inward edge of the buckle bands 202. This structure assures the bridge base 20 to be well fastened both horizontally and vertically

With reference to Fig. 3, which is a cross sectional view of the invention, a pair of opposing tenons 2022 are vertically formed on the bottom of the bridge base 20 to horizontally position the bridge base 20; and, the horizontal pin 2021 is formed by folding inwardly the bottom edge of buckle band 202 to vertically position the bridge base 20.

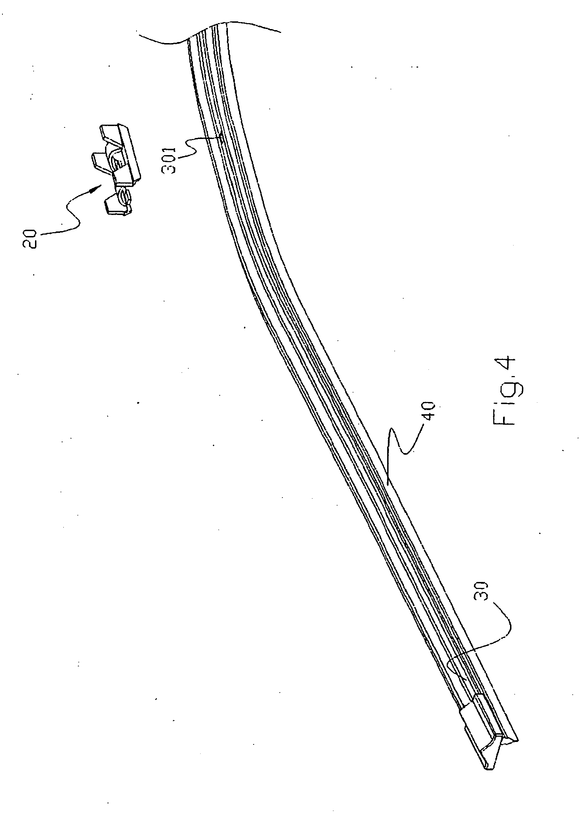

With reference to Fig. 4, which is a sectional view of the invention, a bridge base 20 is buckled to the position hole 301 so as to be mounted on the wiper blade support 30, where a wiper blade 40 is already inserted.

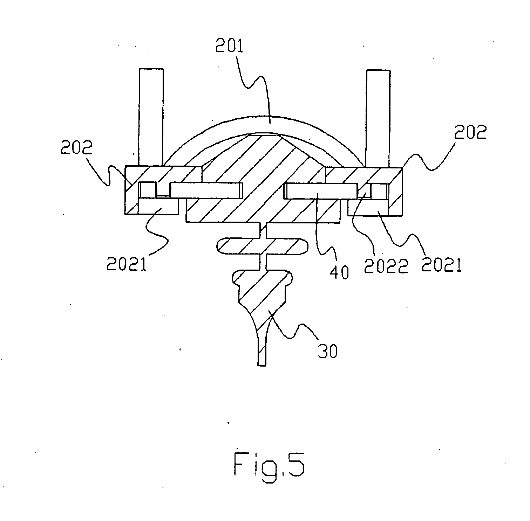

With reference to Fig. 5, which is a cross sectional view of the invention, the bridge base 20 is well positioned on the wiper blade support 30 as it is mounted thereon because the inward edge of the buckle band 202 closely leans against the edge of the wiper blade support 30, the horizontal pin 2021 covers the bottom of the wiper blade support 30 in whole and the vertical tenons 2022 are mortised to position holes 301 of the wiper blade support 30. It is also shown in Fig. 5 that the wiper blade 40 is located between the bridge base 20 and wiper blade support 30 due to a prior assembly of the wiper blade 40 and wiper blade support 30. In addition, the assembly of bridge base 20 and wiper blade support 30 would become tighter provided it goes through a stamping process,

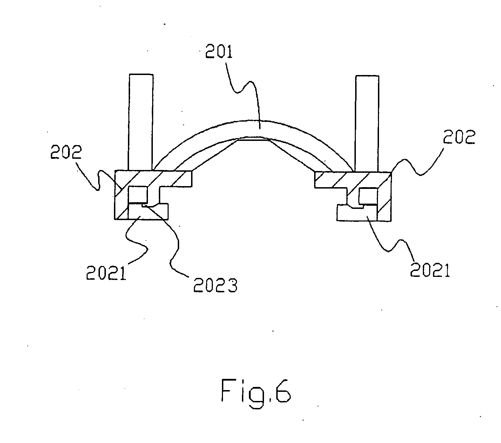

With reference to Fig. 6, which is a sectional view of embodiment (I) of the invention, the bridge base 20, die cast base in an integrated mould, comprises of a connection portion 201 and buckle bands 202, which are formed respectively on the two sides of the connection portion 201 and have a complex number of horizontal pins 2021, which are formed by folding outwardly the bottom edge, and hooks 2023, which are vertically formed on the inward edge. The hooks cannot only position the bridge base 20 horizontally but also hook it to the wiper blade support 30 for a tight mounting.

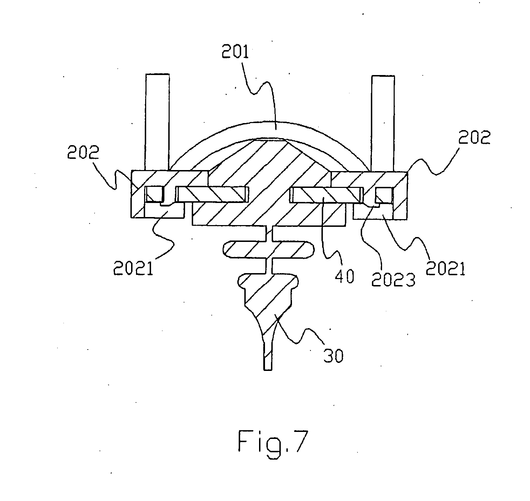

With reference to Fig. 7, which is a sectional view of embodiment (I) of the invention, the bridge base 20 is well positioned on the wiper blade support 30 as it is mounted thereon because the inward edge of the buckle band 202 closely leans against the edge of the wiper blade support 30; the horizontal pins 2021 cover the bottom of the wiper blade support 30 in whole and the hooks 2023 are hooked in position holes 301 to hold the bottom of the wiper blade. It is also shown in Fig. 7 that the wiper blade 40 is located between the bridge base 20 and wiper blade support 30 due to a prior assembly of the wiper blade 40 and wiper blade support 30.

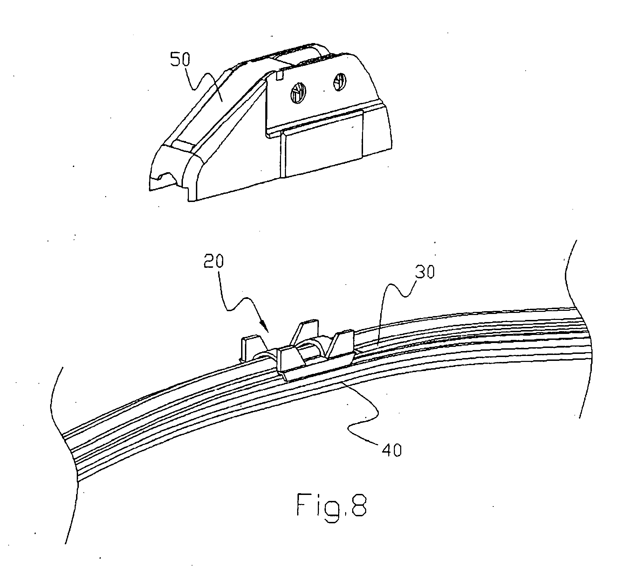

With reference to Fig. 8, which is a sectional view of embodiment (II) of the invention, a housing 50 is about to be mounted on top of the bridge base 20 that is assembled with a wiper blade support 30. The key function of the housing 50 is to connect a windshield wiper assembly to a wiper arm (not illustrated) for installing the windshield wiper assembly on a windshield. As shown in Fig. 8, the housing 50 wraps the bridge base 20 while being mounted thereon.

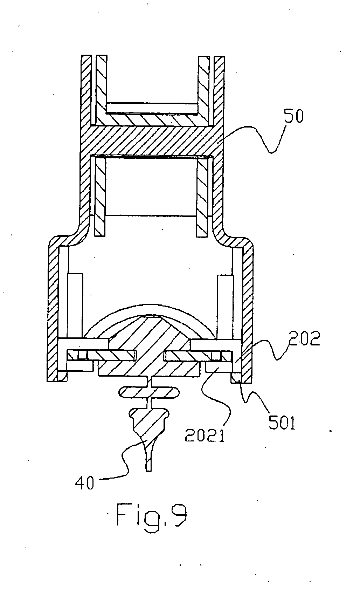

With reference to Fig. 9, which is a cross sectional view of embodiment (II) of the invention, the installation of housing 50 on bridge base 20 is made through buckling a complex number of buttons 501, which are formed on the bottom edge of the housing 50, to the bottom edges of buckle bands 202 on the bridge base 20. The foregoing embodiments exhibit that the bridge base of the invention can be assembled with the housing of any (automobile) brand that has buttons on the bottom edge. As far as the wiper blade manufacturers are concerned, the invention would enable them to standardize the wiper blades in all aspects, except length, so as to drastically reduce mold costs. Therefore, it is crucial to standardize the design of the bottom edge with regard to structure of the housing. Furthermore, such standardized design also achieves cost effectiveness in molding. As far as the consumers are concerned, they can select the housing according to their automobile brand when purchasing the windshield wiper assembly; in the case of wiper blade replacement, they only need to purchase the windshield wiper assembly (including the wiper blade, wiper blade support, and bridge base) that has the bridge base mounted in the factory. The assembly mounted with a bridge base also provides the consumers with installation conveniences and cost-saving benefits. As far as the vendors are concerned, the bridge base of the invention facilitates inventory control and reduces inventory costs because the vendors only need to stock up on windshield wiper assembly (including the wiper blade, wiper blade support, and bridge base) and housings of various (automobile) brands.

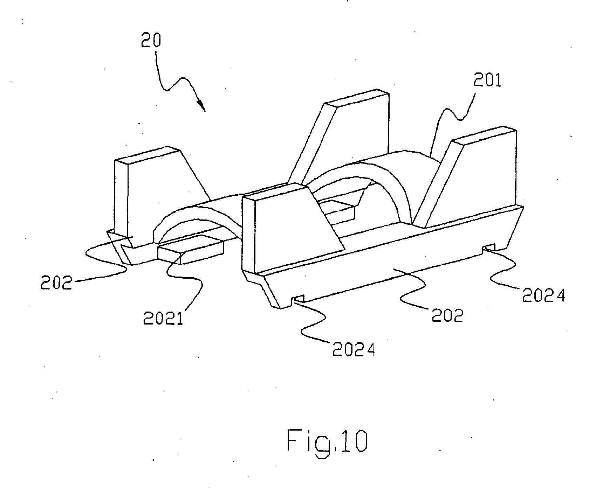

With reference to Fig. 10, which is a sectional view of embodiment (III) of the invention, the buckle bands 202 on two flanks of the bridge base 20, which are formed separately, have several grooves 2024 to be buckled to buttons 501 of the housing 50 so as to assure a close assembly of the housing 50 and bridge base 20.

To sum up, the bridge base of the invention effectively combines a wiper blade support with any housing so as to achieve the objectives of one specific wiper blade support matching the housing of any (automobile) brand, as well as cost effectiveness in production, purchasing, and sales and also maximize alternatives to such a combination.

New characteristics and advantages of the invention covered by this document have been set forth in the foregoing description. Understanding is sought however, that the drawings are for the purpose of illustration only and are not intended to be a definition of the limits of the invention. Changes in methods, shapes, structures, or devices may be made in detail without exceeding the scope of the claims by those who are skilled in the art.

## Claims

1. A bridge base (20), which can be buckled to more than one position hole (301) to be mounted to a wiper blade support (30) for mounting a housing (50) on top, comprising:
a connection portion (201) and buckle bands (202) which are formed respectively on the two sides of the connection portion;
more than one horizontal pin (2021) formed by bending the bottom edge of the respective buckle bands (202); and
at least one pair of vertical tenons (2022) formed on the bottom of the bridge base by bending the inward edge of the respective buckle bands (202),
wherein the pins (2021) of the bridge base (20) are hooked to the bottom of the wiper blade support (30) when the bridge base (20) is mounted on the wiper blade support,
**characterised in that**
the tenons (2022) of the bridge base (20) are mortised to the position holes (301) of the wiper blade support (30) when the bridge base (20) is mounted on the wiper blade support.

2. The bridge base (20) of claim 1, wherein the extreme end of the tenon (2022) is a hook (2023).

3. The bridge base (20) of claim 2, wherein the hook (2023) is buckled in a position hole (301) of the wiper blade support (30) so as to hook to the bottom of the wiper blade support (30).

4. The bridge base (20) of claim 1, wherein the buckle bands (202) of the bridge base (20) are buckled to the edges on the two ends of the wiper blade support (30) when the bridge base (20) is mounted on the wiper blade support (30).

5. The bridge base (20) of claim 1, wherein the housing (50) has a complex number of buttons (501) on the bottom edge.

6. The bridge base (20) of claim 1, wherein the buckle bands (202) of the bridge base (20) have a complex number of grooves (2024) on the edge.

7. The bridge base (20) of claim 6, wherein a hook (2023) is formed on the extreme end of the tenon (2022).

8. The bridge base (20) of claim 7, wherein a complex number of buttons (501), which are formed on the bottom edge of the housing (50), are buckled in the grooves (2024).

## Patentansprüche

1. Brückenbasis (20), welche an mehr als ein Positionsloch (301) geschnallt werden kann, um an eine Wischblattlagerung (30) zum Aufmontieren eines Gehäuses (50) montiert zu werden, umfassend:
einen Verbindungsabschnitt (201) und Schnallbänder (202), welche jeweils um zwei Seiten des Verbindungsabschnitts ausgebildet sind;
mehr als einen horizontalen Stift (2021), der durch Biegen der Bodenkanten der jeweiligen Schnallbänder (202) ausgebildet ist; und
zumindest ein Paar von vertikalen Zapfen (2022), die an dem Boden der Brückenbasis durch Biegen der Einwärtskante der jeweiligen Schnallbänder (202) ausgebildet sind,
wobei die Stifte (2021) der Brückenbasis (20) an den Boden der Wischblattlagerung (30) gehängt sind, wenn die Brückenbasis (20) an der Wischblattlagerung (30) montiert ist,
**dadurch gekennzeichnet, dass**
die Zapfen (2022) der Brückenbasis (20) mit den Positionslöchern (301) der Wischblattlagerung (30) verzapft sind, wenn die Brückenbasis (20) an der Wischblattlagerung montiert ist.

2. Brückenbasis (20) nach Anspruch 1, bei der das äußerste Ende des Zapfens (2022) ein Haken (2023) ist.

3. Brückenbasis (20) nach Anspruch 2, bei der der Haken derart (2023) in ein Positionsloch (301) der Wischblattlagerung (30) geschnallt ist, dass er an dem Boden der Wischblattlagerung (30) eingehängt ist.

4. Brückenbasis nach Anspruch 1, bei der die Schnallbänder (202) der Brückenbasis (20) an die zwei Enden der Wischblattlagerung (30) geschnallt sind, wenn die Brückenbasis (20) an der Wischblattlagerung (30) montiert ist.

5. Brückenbasis (20) nach Anspruch 1, bei der das Gehäuse (50) eine komplexe Anzahl von Knöpfen (501) an der Bodenkante aufweist.

6. Brückenbasis (20) nach Anspruch 1, bei der die Schnallbänder (202) der Brückenbasis (20) eine komplexe Anzahl von Nuten (2024) an der Kante aufweisen.

7. Brückenbasis (20) nach Anspruch 6, bei der ein Haken (2023) an dem äußersten Ende des Zapfens (2022) ausgebildet ist.

8. Brückenbasis (20) nach Anspruch 7, bei der eine komplexe Anzahl von Knöpfen (501), welche an der Bodenkante des Gehäuses (50) ausgebildet sind, in die Nuten (2024) geschnallt ist.

## Revendications

1. Base de connecteur en pont (20), qui peut être passée en boucle dans plus d'un trou de positionnement (301) pour être montée sur un support de balai d'essuie-glace (30) pour monter un logement (50) par-dessus, comprenant :
une partie de connexion (201) et des bandes à boucle (202) qui sont formées respectivement sur les deux côtés de la partie de connexion ;
plus d'une tige horizontale (2021) formée en pliant le bord de fond des bandes à boucle (202) respectives ; et
au moins une paire de tenons verticaux (2022) formés sur le fond de la base de connecteur en pont en pliant le bord intérieur des bandes à boucle (202) respectives,
dans laquelle les tiges (2021) de la base de connecteur en pont (20) sont crochetées sur le fond du support de balai d'essuie-glace (30) lorsque la base de connecteur en pont (20) est montée sur le support de balai d'essuie-glace,
**caractérisée en ce que**
les tenons (2022) de la base de connecteur en pont (20) sont mortaisés sur les trous de positionnement (301) du support de balai d'essuie-glace (30) lorsque la base de connecteur en pont (20) est montée sur le support de balai d'essuie-glace.

2. Base de connecteur en pont (20) selon la revendication 1, dans laquelle l'extrémité du tenon (2022) est un crochet (2023).

3. Base de connecteur en pont (20) selon la revendication 2, dans laquelle le crochet (2023) est passé en boucle dans un trou de positionnement (301) du support de balai d'essuie-glace (30) de façon à se crocheter sur le fond du support de balai d'essuie-glace (30).

4. Base de connecteur en pont (20) selon la revendication 1, dans laquelle les bandes à boucle (202) de la base de connecteur en pont (20) sont passées en boucle sur les bords sur les deux extrémités du support de balai d'essuie-glace (30) lorsque la base de connecteur en pont (20) est montée sur le support de balai d'essuie-glace (30).

5. Base de connecteur en pont (20) selon la revendication 1, dans laquelle le logement (50) a un nombre complexe de boutons (501) sur le bord de fond.

6. Base de connecteur en pont (20) selon la revendication 1, dans laquelle les bandes à boucle (202) de la base de connecteur en pont (20) ont un nombre complexe de rainures (2024) sur le bord.

7. Base de connecteur en pont (20) selon la revendication 6, dans laquelle un crochet (2023) est formé sur l'extrémité du tenon (2022).

8. Base de connecteur en pont (20) selon la revendication 7, dans laquelle un nombre complexe de boutons (501), qui sont formés sur le bord de fond du logement (50), sont passés en boucle dans les rainures (2024).
